# EUROPÄISCHE PATENTSCHRIFT

(11) **EP 0 541 738 B1**
(45) Veröffentlichungstag und Bekanntmachung des Hinweises auf die Patenterteilung: **19.06.1996**
(21) Anmeldenummer: 92909174.2
(22) Anmeldetag: 30.04.1992
(51) Int. Cl.: C03B 23/047, C03B 37/012

(54) **VERFAHREN ZUR HERSTELLUNG EINER VORFORM**
PROCESS FOR MANUFACTURING PREFORMS
PROCEDE DE FABRICATION D'EBAUCHES

(30) Priorität: 31.05.1991 DE 4117816
(43) Veröffentlichungstag der Anmeldung: 19.05.1993
(73) Patentinhaber: Heraeus Quarzglas GmbH, D-63405 Hanau (DE)
(72) Erfinder: LEBER, Helmut, D-6450 Hanau (DE); SCHAPER, Hartwig, D-8750 Aschaffenburg (DE); TREBER, Norbert, D-6450 Hanau 9 (DE); VILSMEIER, Gerhart, D-8750 Aschaffenburg (DE); REIMANN, Klaus, D-6458 Rodenbach 1 (DE)
(74) Vertreter: Grimm, Ekkehard
(86) Internationale Anmeldenummer: EP9200938
(87) Internationale Veröffentlichungsnummer: WO9221625

(56) Entgegenhaltungen:
- EP-A- 0 458 017
- DE-A- 3 206 176
- US-A- 3 711 262

## Beschreibung

Die Erfindung betrifft ein Verfahren zur Herstellung einer Vorform für optische Elemente, insbesondere für optische Fasern, wobei ein rohrförmiger Ausgangs-Körper, der in radialer Richtung gesehen eine sich verändernde Brechzahl aufweist, einer Erhitzungszone zugeführt, dort erweicht und im erweichten Zustand zur Vorform verformt wird.

Vorformen für optische Elemente, insbesondere für optische Fasern, weisen im allgemeinen in radialer Richtung gesehen ein Brechzahlprofil auf, derart, daß ein Kernbereich mit einem höheren Brechungsindex von mindestens einem Mantelbereich mit einer gegenüber dem Kernbereich verminderten Brechzahl umhüllt ist. Auf den Kernbereich in bestimmten Akzeptanzwinkeln axial auftreffende Lichtstrahlen werden aufgrund dieses Brechzahlprofils im Mantelbereich stets wieder in Richtung des Kernbereichs abgelenkt und dadurch innerhalb der Vorform, bzw. innerhalb einer aus der Vorform hergestellten optischen Faser, geführt.

Für spezielle Anwendungen, beispielsweise zur Übertragung hoher Lichtleistungen, weist der das Licht führende Kernbereich eines optischen Elementes einen relativ großen Durchmesser gegenüber der Wandstärke des Mantelbereiches auf. Im allgemeinen aber, insbesondere zur Signalübertragung in der optischen Nachrichtentechnik oder der Sensorik werden optische Fasern eingesetzt, die einen im Vergleich zu ihrer Manteldicke relativ dünnen Kernbereich aufweisen.

Die genannten Ausgangs-Körper für solche Vorformen werden beispielsweise durch Außenabscheidung von Partikeln auf einem länglichen Dorn hergestellt, wobei den abgeschiedenen Partikeln entsprechend dem gewünschten radialen Brechzahlprofil der Vorform Dotierstoffe beigemischt werden. Bei Vorformen für optische Fasern mit dünnen Kernen, wie beispielsweise Monomode-Fasern aus Quarzglas für die Signalübertragung in der optischen Nachrichtentechnik, wird dabei zunächst die dünne Kernglasschicht und darauf die dickwandige Mantelglasschicht abgeschieden. Um ein blasenfreies Sintern der abgeschiedenen "Soot-Schichten" zu gewährleisten, wird die gesamte Mantelglasschicht im allgemeinen in Zwischenschritten schichtweise aufgebaut und glasig gesintert. Dies ist, insbesondere bei dickwandigen Vorformen mit einem relativ großen Arbeits- und Zeitaufwand verbunden. Die Entfernung des Dornes, beispielsweise durch Herausziehen, Herausbohren oder Herausätzen, verursacht Störungen der Innenoberfläche des erzeugten, rohrförmigen Körpers. Mit dem Ziel der Verminderung von Oberflächendefekten werden die Innenoberflächen der rohrförmigen Körper im allgemeinen in aufwendigen Reinigungs-, Glättungs- und/oder Trocknungsverfahren nachbehandelt.

Die bekannte alternative Verfahrensweise zur Herstellung von rohrförmigen Ausgangs-Körpern für Vorformen, nämlich die sogenannte "Innenabscheidung" von Kernglasschichten auf der inneren Oberfläche eines Ausgangs-Rohres, ist, vor allem bei dickwandigen Ausgangs-Rohren, insbesondere aufgrund des hohen Energieaufwandes, der schlechten Ausbeute und der geringen Abscheiderate ebenfalls unwirtschaftlich.

Zum Zweck des Kollabierens wird der rohrförmige Ausgangs-Körper bei den bekannten Verfahren von einem Ende beginnend, fortlaufend über seine Länge in einer Erhitzungszone erhitzt und dabei die Viskosität des Materials des Ausgangs-Körpers soweit erniedrigt, daß er zu einem Vollkörper zusammenfällt. Bei der Herstellung von optischen Fasern kann das Kollabieren des rohrförmigen Ausgangs-Körpers auch gleichzeitig mit dem Verfahrensschritt des Faserziehens erfolgen.

Um Einschlüsse von Restgasen beim Kollabieren eines Glasrohres zur Herstellung einer Vorform für Lichtwellenleiter zu vermeiden, wird in der EP-A2-0 163 071 vorgeschlagen, das Glasrohr während des Kollabierens mit einer Vakuumpumpe zu verbinden, wobei der Unterdruck innerhalb des Glasrohres so gewählt werden soll, daß möglichst keine Verarmung an Dotier-Material in der Vorform für die Lichtwellenleiter auftritt.

Beim vakuumunterstützten Kollabieren eines Rohres können Verzerrungen des Kernbereichs der Vorform auftreten. So ist beispielsweise in "Polarization characteristic of non-circular core single-mode fibres, V.Ramaswamy, H.G.French and R.D.Standley, Applied Optics, Vol.17, No.18, P.3014 to 3017" beschrieben, daß ein hoher Unterdruck innerhalb des zu kollabierenden Rohres eine hantelförmige und ein niedrigerer Unterdruck eine ovale Verformung des Kernbereichs der Vorform bewirken kann.

Aus der EP-A1-100 174 ist ein Verfahren zur Herstellung einer optischen Glasfaser bekannt, bei dem die Glasfaser aus einem beidseitig verschlossenen Glasrohr gezogen wird, wobei zur Erleichterung des Kollabiervorganges das Innere des Glasrohres vorher evakuiert worden ist.

Bei einem aus der US-PS-4,304,581 bekannten Verfahren zum Kollabieren eines Glasrohres mit einer auf der Innenseite des Glasrohres aufgebrachten, einen leicht flüchtigen Dotierstoff enthaltenden Schicht, wird zur Verminderung der Abdampfverluste des Dotierstoffes während des Kollabierens eine gasförmige Halogenverbindung desjenigen Elementes, dessen Abdampfverluste minimiert werden sollen, durch das Rohr geleitet.

Die bekannten Verfahren haben gemeinsam, daß die gesamte Innenoberfläche des rohrförmigen Ausgangs-Körpers auf das Zentrum der kollabierten Vorform abgebildet wird. Neben den bereits erwähnten Problemen der Blasenbildung durch Gaseinschlüsse und der Dotierstoffverarmung durch Abdampfen von Dotiermaterial, führen auch Störungen der Innenoberfläche des rohrförmigen Ausgangs-Körpers, etwa aufgrund von Verunreinigungen, Feuchtigkeit oder anderen Oberflächendefekten, die allein schon dadurch unvermeidlich sind, daß eine Oberfläche eine andere Stöchiometrie aufweist als ein Massivmaterial, zu Inhomogenitäten im Zentrum der Vorform. Dort sind sie im allgemeinen besonders störend.

Der Erfindung liegt die Aufgabe zugrunde, ein kostengünstiges Verfahren der eingangs genannten Art zur Herstellung hochreiner, störungsarmer Vorformen für optische Elemente, insbesondere für optische Fasern, anzugeben.

Diese Aufgabe wird erfindungsgemäß dadurch gelöst, daß als Ausgangs-Körper ein solcher verwendet wird, dessen Brechzahl in radialer Richtung gesehen ab mindestens einer von der Außenoberfläche des Ausgangs-Körpers genügend beabstandeten Grenzfläche von außen nach innen abnimmt, daß bis auf eine Außenhaut der in der Erhitzungszone erweichte Teil des Ausgangs-Körpers nach innen umgestülpt und in der Längsachse des rohrförmigen Ausgangs-Körpers, entgegen dessen Zuführrichtung zur Erhitzungszone die Vorform gebildet wird, und daß die verbleibende Außenhaut in Zuführrichtung des Ausgangs-Körpers als Stab abgezogen wird.

Dadurch, daß bis auf eine Außenhaut der erweichte Ausgangs-Körper nach innen umgestülpt und in der Längsachse des Ausgangs-Körpers, entgegen dessen Zuführrichtung zur Erhitzungszone die Vorform gebildet wird und nur die verbleibende Außenhaut des Ausgangs-Körpers in dessen Zuführrichtung als Stab abgezogen wird, wird eine Aufspaltung eines als Ausgangs-Körpers in eine Richtung sich bewegenden Massenflusses in zwei, sich in entgegengesetzte Richtungen bewegende Massenflüsse erreicht, derart, daß der Rohr-Innenraum zusammenfällt und die verschmutzten Bereiche der inneren und äußeren Oberfläche des rohrförmigen Ausgangs-Körpers jeweils die äußere Oberfläche der Vorform bzw. die äußere Oberfläche der als Stab abgezogenen Außenhaut bilden. Sowohl die so hergestellte Vorform als auch der als kollabierende Außenhaut abgezogene Stab, weisen dadurch in ihrem Inneren keine Materialbereiche auf, die vorher einmal eine Oberfläche gebildet hatten. Das Material der Oberflächen und der oberflächennahen Schichten des rohrförmigen Ausgangs-Körpers findet sich auch bei der daraus hergestellten Vorform auf der Oberfläche, von wo es erforderlichenfalls leicht entfernt werden kann. Eine kostengünstige Herstellung der Vorform wird dadurch ermöglicht, daß als Ausgangs-Körper ein solcher verwendet wird, dessen Brechzahl in radialer Richtung gesehen in mindestens einem von der Außenoberfläche des Ausgangs-Körpers genügend beabstandeten Dotier-Bereich von außen nach innen abnimmt. Dadurch ist es möglich, auf einem mit relativ geringem Aufwand herstellbaren Grundkörper, beispielsweise auf einem dickwandigen Rohr mit über der Handstärke homogener Brechzahlverteilung, durch Außen- abscheidung auf einfache Heise Materialschichten aufzubringen. Die Schicht- dicke der aufzubringenden Materialschichten kann dabei sehr gering sein, im Extremfall entspricht die aufzubringende Masse genau der für den Kernbereich der herzustellenden Vorform und der für den als Stab abzuziehenden Außenhaut benötigten Masse. Unter Grenzfläche wird dabei ein Bereich verstanden, ab dem in radialer Richtung von außen nach innen gesehen eine stetige oder eine stufenweise Abnahme der Brechzahl auftritt, wobei diese Änderung der Brechzahl durch eine definierte Änderung der Material-Zusammensetzung bzw. durch eine Dotierung eines den Ausgangs-Körper bildenden Grundwerkstoffes mit einem die Brechzahl verändernden Dotier-Mittel erfolgen kann. Die außerhalb der Grenzfläche liegenden Bereiche können dabei jeden beliebigen Brechzahlverlauf aufweisen. Der Grenzflächenbereich ist dann von der Außenoberfläche des Ausgangs-Körpers genügend beabstandet, wenn der Abstand zwischen der Außenoberfläche des Ausgangs-Körpers und der ihr benachbarten Grenzfläche mindestens so groß ist wie die Dicke der Außenhaut. Dadurch wird die Herstellung einer Vorform ermöglicht, über deren Querschnitt gesehen mindestens eine rotationssymmetrische Brechzahländerung auftritt.

Durch das Umstülpen des erweichten Ausgangs-Körpers und die Bildung der Vorform in der Längsachse des Ausgangs-Körpers wird ein Zusammenlegen sich gegenüberliegender Innenwandflächen des Ausgangs-Körpers und eine daraus resultierende Abflachung des Kernbereichs der sich bildenden Vorform vermieden.

Es wird eine Verfahrensweise bevorzugt, bei der der rohrförmige Ausgangs-Körper der Erhitzungszone vertikal von unten zugeführt wird. Normalerweise, insbesondere aus Gründen einer hohen Ausbeute, ist es erwünscht, daß die Vorform den größten Anteil der Masse des Ausgangs-Körpers enthält. Bei einer vertikalen Zuführung des Ausgangs-Körpers zur Erhitzungszone unterstützen die im Kollabier-Bereich wirksamen Gravitations-Kräfte die Ausbildung einer Vorform mit großem Durchmesser. Erforderlichenfalls wird die aufgrund der Schwerkraft sich beschleunigt bildende Vorform durch eine mit der gewünschten Bildungsgeschwindigkeit der Vorform sich absenkenden Stützvorrichtung abgestützt.

Es hat sich auch eine Ausgestaltung des Verfahrens bewährt, bei dem im rohrförmigen Teil des Ausgangs-Körpers aufgrund fortgesetzten Evakuierens ein gegenüber dem von außen auf den Ausgangs-Körper einwirkenden Außendruck verminderter Innendruck aufrechterhalten wird. Aufgrund der durch den verminderten Innendruck im Kollabier-Bereich angreifenden, nach innen gerichteten Kräfte, wird die Bildung der Vorform in Richtung der Längsachse des Ausgangs-Körpers, entgegen dessen Zuführrichtung in die Erhitzungszone unterstützt. Je nach Höhe des durch den verminderten Innendrucks erzeugten Vakuums und nach Einstellung der übrigen Verfahrensparameter, wie Temperatur im Kollabier-Bereich, Abzugsgeschwindigkeit des Stabes und Zuführgeschwindigkeit des Ausgangs-Körpers sowie den geometrischen Abmessungen des Ausgangs-Körpers kann die Bildung der Vorform allein durch die im Kollabier-Bereich vorhandenen Druckverhältnisse bewirkt werden.

Es hat sich auch als vorteilhaft erwiesen, an der sich bildenden Vorform zusätzlich zu ziehen. Beispielsweise kann an die Stirnfläche der sich bildenden Vorform eine in Längsrichtung des Ausgangs-Körpers bewegliche Zugvorrichtung angesetzt werden. Die Bildungsgeschwindigkeit der Vorform kann damit kontrolliert werden.

Es hat sich auch bewährt, den rohrförmigen Ausgangs-Körper und den aus der Außenhaut sich bildenden Stab während des Verformens zu rotieren. Zufällige Asymmetrien, beispielsweise innerhalb der Erhitzungszone, werden dadurch ausgeglichen und die sich bildende Vorform im Zentrum des rohrförmigen Teils des Ausgangs-Körpers stabilisiert.

Für die Herstellung von optischen Vorformen hat sich für das erfindungsgemäße Verfahren die Verwendung von solchen rohrförmigen Ausgangs-Körpern als günstig erwiesen, die, abgesehen von die Brechzahl ändernden Dotier-Mitteln, im wesentlichen aus SiO₂ bestehen und insbesondere solchen Ausgangs-Körpern, die Germanium und/oder Fluor enthalten.

Es wird eine Verfahrensweise bevorzugt, bei der geschichtete, rohrförmige Ausgangs-Körper verwendet werden, die in radialer Richtung gesehen, von außen nach innen eine Schicht aus undotiertem SiO₂ oder eine Schicht aus Germanium-dotiertem SiO₂ und dazu benachbart und weiter innen liegend eine Fluor-dotierte SiO₂-Schicht aufweisen. Durch das Umstülpen im Kollabier-Bereich wird die Schichtenfolge umgekehrt, so daß in der Vorform die Fluor-dotierte Schicht, eine niedrigere Brechzahl als die undotierte bzw. die mit Germanium-dotierte SiO₂-Schicht aufweisend, in radialer Richtung weiter außen liegt und als Mantelglas-Schicht für das in der SiO₂-Schicht geführte Licht dienen kann.

Das erfindungsgemäße Verfahren wird anhand einer schematischen Darstellung nachfolgend beispielhaft beschrieben.

Mit der Bezugsziffer 1 ist ein Quarzglas-Hohlzylinder mit einem Gesamtdurchmesser von 130 mm und einem Innendurchmesser von 100 mm bezeichnet. Auf dem Quarzglas-Hohlzylinder 1 ist eine 1 mm dicke, mit Germaniumdioxyd-dotierte Quarzglas-Schicht 2 abgeschieden, an deren Grenzfläche 3 zur benachbarten, reinen Quarzglas-Schicht ein Brechzahlsprung von 0,3 % auftritt (Die Geometrie des Hohlzylinders ist in der Zeichnug aus Gründen der Deutlichkeit nicht maßstabsgerecht dargestellt).

Mit einer Zuführgeschwindigkeit von 60 mm/min wird der Quarzglas-Hohlzylinder 1 vertikal von unten nach oben der Heizzone 4 eines Induktionsofens zugeführt. Die Zuführrichtung ist mit dem Richtungspfeil 5 gekennzeichnet. Aufgrund der Temperatur innerhalb der Heizzone 4 von etwa 2200 Grad Celsius erweicht das Quarzglas, so daß der Hohlzylinder 1 in einem Kollabier-Bereich 6, in dem das Quarzglas eine mittlere Viskosität von etwa 10⁵ dPas aufweist, zusammenfällt. Nachdem die in die Heizzone 4 hineinragende Hohlzylinder-Öffnung verschlossen ist, wird von der kalten Stirnseite 7 des Hohlzylinders 1 aus, eine, in dessen Längsrichtung verschiebbare, Ziehstange 8 aus Quarzglas durch eine vakuumdichte Durchführung 9 ins Innere des Quarzglas-Hohlzylinders 1 eingeführt und an der Quarzglas-Masse im Kollabier-Bereich 6 angeschmolzen. Durch Evakuieren des Hohlzylinders 1 mittels einer Vakuumpumpe 10 auf einen Innendruck von 500 mbar und durch Ziehen an der Ziehstange 8 entgegen der Zuführrichtung 5 sowie gleichzeitiges Abziehen von Glasmasse aus dem Kollabier-Bereich 6 in Zuführrichtung 5 wird eine Teilung des als Hohlzylinder 1 in Richtung der Heizzone 4 fließenden Glasmassestromes in zwei Teilströme erreicht, wovon der eine Teilstrom, die Außenhaut, als Stab 11 in Zuführrichtung 5 und der andere Teilsrom als Vorform 12 in der Achse des Hohlzylinders 1, entgegen der Zuführrichtung 5 abgezogen wird.

Im Gleichgewicht zwischen Temperatur im Kollabier-Bereich 6, Zuführgeschwindigkeit des Hohlzylinders 1 und Abziehgeschwindigkeit des Stabes 11, die ebenfalls 60 mm/min beträgt, bildet sich aufgrund der Schwerkraft eine Vorform 12 mit einem Durchmesser von ca. 80 mm in Richtung des Richtungspfeiles 13 aus. Der ursprünglich als Ziehstange 8 an die dem Kollabier-Bereich 6 abgewandte Stirnseite der Vorform 12 angesetzte Quarzglas-Stab dient in diesem Stadium des Verfahrens als absenkbare Stützvorrichtung um eine aufgrund der zunehmenden Masse der sich bildenden Vorform 12 beschleunigte Absinkgeschwindigkeit und eine damit verbundene Änderung des Durchmessers der Vorform 12 zu verhindern. Bei einer Absenkgeschwindigkeit der Stützvorrichtung von 60 mm/min bildet sich aufgrund des Umstülpens der Schichtenfolge 2,3 im Kollabier-Bereich 6, im Zentrum der Vorform 12 ein mit Germanium-dotierter Kernbereich 14 mit einem Durchmeser von ca. 6,6 mm aus. Die übrige Germanium-dotierte Glasmasse wird als Stab 11 in Form des etwa 22 mm dicken Stabes 11 in Abziehrichtung 13 abgezogen. Durch das Umstülpen im Kollabier-Bereich 6 und das Abziehen der Außenhaut als Stab 11 werden alle oberflächennahen Verunreinigungen und Defekte der äußeren Oberfläche des Hohlzylinders 1 auf die äußere Oberfläche des Stabes 11 und alle oberflächennahen Defekte und Verunreinigungen der inneren Oberfläche des Hohlzylinders 1 auf die äußere Oberfläche der Vorform 12 abgebildet, von wo sie gegebenenfalls einfach entfernt werden können. Da der Kernbereich 14 der Vorform 12 dadurch frei von Materialschichten ist, die einmal eine Oberfläche gebildet hatten ist die Vorform 12 ist, auch aufgrund ihrer angegebenen Geometrie, gut geeignet zur Herstellung von Monomode-Lichtleitfasern.

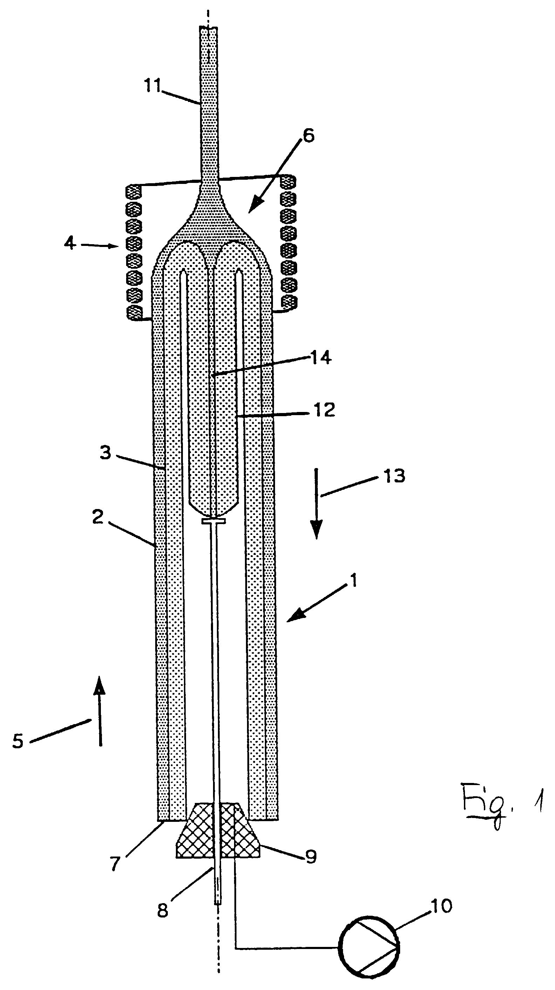

## Patentansprüche

1. Verfahren zur Herstellung einer Vorform (12) für optische Elemente, insbesondere für optische Fasern, wobei ein rohrförmiger Ausgangs-Körper (1), der in radialer Richtung gesehen eine sich verändernde Brechzahl aufweist, einer Erhitzungszone (4) zugeführt, dort erweicht und im erweichten Zustand zur Vorform verformt wird, dadurch gekennzeichnet, daß als Ausgangs-Körper (1) ein solcher verwendet wird, dessen Brechzahl in radialer Richtung gesehen ab mindestens einer von der Außenoberfläche des Ausgangs-Körpers (1) genügend beabstandeten Grenzfläche (3) von außen nach innen abnimmt, daß bis auf eine Außenhaut der in der Erhitzungszone (4) erweichte Teil des Ausgangs-Körpers (1) nach innen umgestülpt und in der Längsachse des rohrförmigen Ausgangs-Körpers (1), entgegen dessen Zuführrichtung (5) zur Erhitzungszone (4) die Vorform (12) gebildet wird, und daß die verbleibende Außenhaut in Zuführrichtung (5) des Ausgangs-Körpers (1) als Stab (11) abgezogen wird.

2. Verfahren nach Anspruch 1, dadurch gekennzeichnet, daß der rohrförmige Ausgangs-Körper (1) der Erhitzungszone (4) vertikal von unten zugeführt wird.

3. Verfahren nach Anspruch 1 oder 2, dadurch gekennzeichnet, daß im rohrförmigen Teil des Ausgangs-Körper (1) durch fortgesetztes Evakuieren ein gegenüber dem von außen auf den Ausgangs-Körpers (1) einwirkenden Außen- druck verminderter Innendruck aufrechterhalten wird.

4. Verfahren nach einem der Ansprüche 1 bis 3, dadurch gekennzeichnet, daß an der sich bildenden Vorform (12) gezogen wird.

5. Verfahren nach einem der Ansprüche 1 bis 4, dadurch gekennzeichnet, daß der rohrförmige Ausgangs-Körper (1) und der aus der Außenhaut sich bildende Stab (11) während des Verformens rotiert werden.

6. Verfahren nach einem der Ansprüche 1 bis 5, dadurch gekennzeichnet, daß als rohrförmiger Ausgangs-Körper (1) ein solcher verwendet wird, der abgesehen von seine Brechzahl ändernden Dotiermitteln, im wesentlichen aus SiO₂ besteht.

7. Verfahren nach Anspruch 6, dadurch gekennzeichnet, daß ein rohrförmiger Ausgangs-Körper (1) verwendet wird, der wenigstens eines der Dotiermittel Germanium und/oder Fluor enthält.

8. Verfahren nach einem der Ansprüche 1 bis 7, dadurch gekennzeichnet, daß ein geschichteter rohrförmiger Ausgangs-Körper (1) verwendet wird, der in radialer Richtung von außen nach innen gesehen eine Schicht (2) aus undotiertem SiO₂ oder mit Germanium dotiertem SiO₂ und dazu benachbart und weiter innen liegend eine Fluor-dotierte SiO₂-Schicht (3) aufweist.

## Claims

1. Process for manufacturing a preform (12) for optical elements, in particular for optical fibres, a tubular base body (1) which has a varying refractive index in the radial direction being fed to a heating zone (4), softened there and formed in the softened state into the preform, characterized in that the base body (1) used is one whose refractive index in the radial direction decreases from the outside to the inside from at least one interface (3) a sufficient distance away from the outer surface of the base body (1), that, except for an outer skin, that part of the base body (1) which is softened in the heating zone (4) is inverted internally and the preform (12) is formed along the longitudinal axis of the tubular base body (1), in a direction opposite to its feed direction (5) to the heating zone (4), and that the remaining outer skin is drawn off as rod (11) in the feed direction (5) of the base body (1).

2. Process according to Claim 1, characterized in that the tubular base body (1) is fed to the heating zone (4) vertically from below.

3. Process according to Claim 1 or 2, characterized in that an internal pressure which is lower than the external pressure acting from outside on the base body (1) is maintained in the tubular part of the base body (1) by continuous evacuation.

4. Process according to any of Claims 1 to 3, characterized in that a tensile force is exerted on the preform (12) being formed.

5. Process according to any of Claims 1 to 4, characterized in that the tubular base body (1) and the rod (11) forming from the outer skin are rotated during the shaping procedure.

6. Process according to any of Claims 1 to 5, characterized in that the tubular base body (1) used is one which, apart from dopants which change its refractive index, consists essentially of SiO₂.

7. Process according to Claim 6, characterized in that a tubular base body (1) is used which contains at least one of the dopants germanium and/or fluorine.

8. Process according to any of Claims 1 to 7, characterized in that a layered tubular base body (1) is used which, viewed in the radial direction from the outside to the inside, has a layer (2) of undoped SiO₂ or germanium-doped SiO₂ and, adjacent thereto and located further inwards, a fluorine-doped SiO₂ layer (3).

## Revendications

1. Procédé de fabrication d'une préforme (12) pour éléments optiques, en particulier pour fibres optiques, dans lequel on amène un corps initial (1) de forme tubulaire, qui, vu selon la direction radiale, présente un indice de réfraction variable, à une zone de chauffage (4), on l'y ramollit et, dans l'état ramolli, on lui donne la forme d'une préforme, caractérisé par le fait que comme corps initial (1) on emploie un corps dont, vu selon la direction radiale, l'indice de réfraction décroît, de l'extérieur vers l'intérieur, depuis au moins une surface limite (3) située à une distance suffisante de la surface extérieure du corps initial (1), qu'à l'exception d'une peau extérieure, on retrousse la partie du corps initial (1) ramollie dans la zone de chauffage et que la préforme (12) se forme sur l'axe longitudinal du corps initial de forme tubulaire (1), à l'encontre du sens (5) dans lequel on amène à la zone de chauffage (4) ce corps initial, et que l'on extrait la peau extérieure subsistante, sous forme d'une baguette (11), dans le sens (5) d'amenée du corps initial (1).

2. Procédé selon la revendication 1, caractérisé par le fait que l'on amène verticalement, d'en bas, le corps initial (1), de forme tubulaire, dans la zone de chauffage (4).

3. Procédé selon la revendication 1 ou 2, caractérisé par le fait que, dans la portion tubulaire du corps initial (1), grâce à une mise sous vide qui se poursuit, on maintient une pression intérieure réduite par rapport à la pression extérieure qui agit, de l'extérieur, sur le corps initial (1).

4. Procédé selon l'une des revendications 1 à 3, caractérisé par le fait que l'on tire sur la préforme (12) en cours de formation.

5. Procédé selon l'une des revendications 1 à 4, caractérisé par le fait que, pendant la mise en forme, on entraîne en rotation le corps initial de forme tubulaire (1) et la baguette (1) qui se forme à partir de la peau extérieure.

6. Procédé selon l'une des revendications 1 à 5, caractérisé par le fait que, comme corps initial de forme tubulaire (1), on emploie un corps qui, en dehors des agents dopants qui modifient son indice de réfraction, est essentiellement constitué de SiO₂.

7. Procédé selon la revendication 6, caractérisé par le fait que l'on emploie un corps initial de forme tubulaire (1) qui contient au moins l'un des agents dopants germanium et/ou fluor.

8. Procédé selon l'une des revendications 1 à 7, caractérisé par le fait que l'on emploie un corps initial de forme tubulaire (1) qui est constitué de couches et qui présente, vu de l'extéreur vers l'intérieur selon la direction radiale, une couche (2) de SiO₂ non dopé ou de SiO₂ dopé de germanium et, près de celle-ci et allant plus loin vers l'intérieur, une couche de SiO₂ (3) dopée au fluor.
